(19) Europäisches Patentamt
European Patent Office
Office européen des brevets

(11) Veröffentlichungsnummer : **0 053 223**
**B1**

(12) # EUROPÄISCHE PATENTSCHRIFT

(45) Veröffentlichungstag der Patentschrift : **21.11.85**

(51) Int. Cl.⁴ : **C 04 B 24/42**, C 04 B 28/20

(21) Anmeldenummer : **81105768.6**

(22) Anmeldetag : **22.07.81**

(54) **Verfahren zum Herstellen von Bausteinen oder Bauteilen.**

(30) Priorität : **28.11.80 DE 3044948**

(43) Veröffentlichungstag der Anmeldung : **09.06.82 Patentblatt 82/23**

(45) Bekanntmachung des Hinweises auf die Patenterteilung : **21.11.85 Patentblatt 85/47**

(84) Benannte Vertragsstaaten : **AT BE CH DE FR GB LI NL SE**

(56) Entgegenhaltungen :
**WO-A-81 /017 03**
**DE-A- 2 558 184**
**DE-A- 3 004 346**
**DE-B- 2 356 142**
**US-A- 3 190 762**
**Die Akte enthält technische Angaben, die nach dem Eingang der Anmeldung eingereicht wurden und die nicht in dieser Patentschrift enthalten sind.**

(73) Patentinhaber : **WACKER-CHEMIE GMBH**
**Prinzregentenstrasse 22**
**D-8000 München 22 (DE)**

(72) Erfinder : **Roth, Michael, Dr., Dipl.-Chem.**
**Orffstrasse 11**
**D-8263 Burghausen (DE)**
Erfinder : **Frey, Volker, Dr., Dipl.-Chem.**
**Asternweg 7a**
**D-8263 Burghausen (DE)**

**EP 0 053 223 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist bereits bekannt, bei der Herstellung von Bausteinen oder Bauteilen, die unter Dampfeinwirkung, was auch als « hydrothermal » bezeichnet wird, abbinden oder gehärtet werden, nämlich zur Herstellung von dampfgehärtetem geringgewichtigem Gasbeton mit hydrophoben Eigenschaften, dem Brei aus hydraulischem Bindemittel, Wasser und Zuschlagstoffen vor der Formgebung und Einwirkung des Wasserdampfs Silikonöl zuzusetzen. Hierzu wird auf DE-A 30 04 346, offengeleft 28. August 1980, Internationella Siporex AB, verwiesen.

Die erfindungsgemäß hergestellten Bausteine oder Bauteile, die unter Dampfeinwirkung abbinden gelassen oder gehärtet wurden, besitzen bei gleicher Menge von zugesetztem Organopolysiloxan stärkeres Wasserabweisungsvermögen, das zudem gleichmäßiger auf ihrer Oberfläche oder in ihnen verteilt ist sowie bessere Porenverteilung und können nach dem Abbinden oder Härten leichter beschichtet werden, z. B. mit Bitumen, als Bausteine oder Bauteile, die unter Dampfeinwirkung abbinden gelassen oder gehärtet wurden und Silikonöl gemäß DE-A 30 04 356 enthalten.

Gegenstand der Erfindung ist ein Verfahren zum Herstellen von Bausteinen oder Bauteilen, die unter Dampfeinwirkung abbinden oder gehärtet werden, wobei der Brei aus hydraulischem Bindemittel, Wasser und Zuschlagstoffen vor der Formgebung und Einwirkung des Wasserdampfs Organo(poly)siloxan enthält, dadurch gekennzeichnet, daß zumindest ein Teil des Organo(poly)siloxanes aux mindestens einer Verbindung der allgemeinen Formel

$$R_xSi(OR')_y(OH)_zO_{\frac{4-x-y-z}{2}}$$

besteht, worin mindestens 10 % der Anzahl der Reste R gleiche oder verschiedene Alkylreste mit mindestens 4 Kohlenstoffatomen je Rest und die gegebenenfalls vorhandenen übrigen Reste R Alkylreste mit 1 bis 3 Kohlenstoffatomen, insbesondere Methyl-und/oder Phenylreste, R' gleiche oder verschiedene Alkylreste mit 1 bis 4 Kohlenstoffatomen je Rest bedeuten, x 0, 1, 2 oder 3, durchschnittlich 0,9 bis 1,8, y 0, 1, 2 oder 3, durchschnittlich 0,01 bis 2,0 und z 0,1, 2 oder 3, durchschnittlich 0,00 bis 0,5 ist, mit der Maßgabe, daß die Summe von x + y + z höchstens 3,5 ist.

Vorzugsweise haben die Reste R jeweils mindestens 8 und höchstens 18 Kohlenstoffatome je Rest. Beispiele für Reste R mit mindestens 4 Kohlenstoffatomen je Rest sind der n-Butyl-, sec.-Butyl-, Cyclohexyl-, 2-Ethylhexyl-, n-Octyl-, Lauryl- und Stearylrest sowie Hexyl-, Methylcyclohexyl- und Octadecylreste.

Weiterhin ist insbesondere wegen der leichteren Zugänglichkeit bevorzugt, daß x durchschnittlich höchstens 1,5 ist.

Bei den Resten R' kann es sich um den Methyl-, Ethyl-, n-Propyl-, n-Butyl-, sec.-Butyl- oder tert.-Butylrest oder um Gemische aus solchen Resten handeln.

Vorzugsweise haben die Organo(poly)siloxane der allgemeinen Formel

$$R_xSi(OR')_y(OH)_zO_{\frac{4-x-y-z}{2}}$$

eine Viskosität von höchstens 300 $mm^2 \cdot s^{-1}$ bei 25 °C, insbesondere von 5 bis 300 $mm^2 \cdot s^{-1}$ bei 25 °C.

Beispiele für Strukturen von Organo(poly)siloxanen der oben angegebenen Formel sind

$$RSi(OR'_2)O[SiR(OR')O]_aSi(OR')_2R\ ,$$

wobei R und R' jeweils die oben dafür angegebene Bedeutung haben, und a 0 oder 1 ist, und

$$RSi(OR')_2OSiRO[SiR(OR')_2]OSiR(OR')OSi(OR')_2R\ ,$$

wobei R und R' jeweils die oben dafür angegebene Bedeutung haben.

Bei den erfindungsgemäß hergestellten Bausteinen oder Bauteilen kann es sich um beliebige Bausteine oder Bauteile handeln, die auch bisher unter Dampfeinwirkung, abbinden lassen oder gehärtet werden konnten. Solche aus Gasbeton sind bevorzugt. Weitere Beispiele für erfindungsgemäß herstellbare Bausteine oder Bauteile sind solche aus Schaumbeton und Kalksandstein. Bei dem hydraulischen Bindemittel, aus dem solche Bausteine oder Bauteile hergestellt werden, dürfte es sich insbesondere um Kalk (Ca O bzw. Ca $(OH)_2$), oder Portlandzement handeln. Beispiele für Zuschlagstoffe sind Sand, Vermiculite (Blähglimmer), Perlite (Blählava), Kies, Holzmehl, Holzwolle, Asbest, Abbindeverzögerer, wie Gluconsäure, Calciumfluconat, Vinylpolymerisate, Pigmente, z. B. Oxidfarben, und Gasbildner, z. B. Aluminiumpulver.

Vorzugsweise wird Organopolysiloxan der allgemeinen Formel

$$R_xSi(OR')_y(OH)_zO_{\frac{4-x-y-z}{2}}$$

in Mengen von 0,01 bis 5,0 Gewichtsprozent, insbesondere 0,05 bis 1,0 Gewichtsprozent, jeweils bezogen auf das Gesamtgewicht von trockenem hydraulischem Bindemittel und trockenem Zuschlagstoff, verwendet.

Das erfindungsgemäß verwendete Organo(poly)siloxan oder ein Gemisch aus mindestens zwei solcher Organo(poly)siloxane kann in beliebiger Weise mit den übrigen Rohstoffen, die für die Herstellung der Bausteine oder Bauteile verwendet werden, die unter Dampfeinwirkung abbinden oder gehärtet werden, vermischt worden sein. Es kann somit z. B. mit dem mehr oder weniger fertigen Brei aus hydraulischem Bindemittel, Wasser und Zuschlagstoff vor der Formgebung des aus diesen Rohstoffen gebildeten Gemisches vermischt worden sein. Vorzugsweise wurde jedoch das erfindungsgemäß verwendete Organo(poly)siloxan zunächst nur mit einem Teil der Rohstoffe aus denen dieser Brei bereitet wird, z. B. mit Wasser oder mit Wasser und Kalk, vermischt und das so erhaltene Gemisch dann mit der restlichen Menge der Rohstoffe vermengt.

Zur besseren Verteilung von erfindungsgemäß verwendetem Organo(poly)siloxan in den damit zu vermischenden anderen Stoffen kann dieses Organo(poly)siloxan mit Lösungsmittel, das mit Wasser mischbar ist, wie Alkoholen mit 1 bis 3 Kohlenstoffatomen, z. B. Isopropanol, oder Dioxan, vermischt sein.

Zur besseren Verteilung vom erfindungsgemäß verwendeten Organo(poly)siloxan in den damit zu vermischenden anderen Stoffen kann dieses Organopolysiloxan auch im Gemisch mit oberflächenaktiven Stoffen, wie Alkalialkylsulfaten, Alkylsulfonaten oder Polyglykolen, oder Schutzkolloiden, wie Polyvinylalkohol, oder einer Mischung aus oberflächenaktivem Stoff und Schutzkolloid, z. B. einer Mischung aus Natriumlaurylsulfat und Polyvinylalkohol eingesetzt worden sein.

Zusätzlich zum hydraulischen Bindemittel, Wasser, Zuschlagstoff und Organo(poly)siloxan kann der Brei aus dem Durch Formgebung und Einwirkung von Wasserdampf Bausteine oder Bauteile hergestellt werden, als Hydrolysekatalysatoren geeignete Metallverbindungen, wie Organozinnverbindungen, z. B. Dibutylzinndilaurat oder Titanbutylat, enthalten. Das erfindungsgemäß verwendete Organo(poly)siloxan kann auch vor dem Vermischen mit den anderen Stoffen mit anorganischer Säure, wie Salzsäure, oder Carbonsäure, wie Essigsäure, vermischt worden sein.

Die Formgebung des Breies, aus dem die Bausteine oder Bauteile hergestellt werden, und die Dampfeinwirkung, unter der das Abbinden oder Härten erfolgt, kann auf beliebige Weise erfolgen, nach der auch bisher Bausteine oder Bauteile unter Einwirkung von Wasserdampf hergestellt werden konnten.

## Beispiel 1

Zu Gemischen aus 90 Gewichtsteilen $SiO_2$-Sand und 10 Gewichtsteilen Weißfeinkalk (CaO) wird jeweils die in der folgenden Tabelle angegebene Menge Organosiloxan der Formel

$$RSi(OCH_3)_2O_{0,5}$$

worin 70 % der Anzahl der Reste R Methylgruppen und 30 % der Anzahl der Reste R 2-Ethylhexylgruppen sind, und soviel Wasser gegeben wie zum Ablöschen des Kalks und zur Erzielung einer Mischung mit geeigneter Pressfeuchte erforderlich ist. Aus den so erhaltenen Mischungen werden Formlinge gepresst und unter Dampfeinwirkung gehärtet.

In der folgenden Tabelle ist die Wasseraufnahme der so erhaltenen Kalksandsteine nach 24 Stunden Lagerung unter Wasser in Gewichtsprozent, bezogen auf das Trockengewicht der Kalksandsteine, angegeben.

Tabelle

| Organosiloxanmenge Gewichtsprozent *) | Wasseraufnahme Gewichtsprozent |
|---|---|
| 0 | 16,9 |
| 0,1 | 9,3 |
| 0,2 | 7,5 |
| 0,4 | 3,1 |

*) bezogen auf das Gesamtgewicht von Sand und CaO

## Beispiel 2

58,5 kg Quarzsand mit einem Siliciumdioxidgehalt von 97 Gewichtsprozent, bezogen auf das Gewicht des Sands, werden in einer Kugelmühle naß zu einem leichtflüssigem Schlamm gemahlen. In diesen Schlamm werden zunächst 5,0 kg Portlandzement, dann 24,5 kg ungelöschter Kalk mit einem

CaO-Gehalt von 86 Gewichtsprozent, dann 12,0 kg sogenannter « Abkratzschlamm » (Erklärung dieses Begriffs erfolgt bei der Beschreibung des Vergleichsversuchs), dann soviel Wasser, daß die Gesamtmenge an Wasser 41,5 kg beträgt, dann 22,2 kg Organosiloxan der in Beispiel 1 angegebenen Formel und schließlich 0,14 kg dünnschuppiges Aluminiumpulver mit einem Al-Gehalt von 93 Gewichtsprozent eingemischt. Dann wird noch 6 Minuten bei 35 °C gemischt und die so erhaltene Mischung 1,5 Stunden ruhen gelassen.

0,45 kg der so erhaltenen Mischung werden zu einer Mischung gegeben, die wie vorstehend beschrieben bereitet wurde mit der Abänderung, daß 58,5 kg Wasser anstele von 41,5 kg Wasser eingesetzt wurden und kein Organosiloxan verwendet wurde. Dann werden aus der Mischung Formlinge gegossen und die Formlinge unter einem Wasserdampfdruck von 11,8 bar innerhalb 11 Stunden gehärtet.

Der so erhaltene Gasbeton hat folgende Eigenschaften :

Druckfestigkeit : 2,84 $N/mm^2$
Volumengewicht : 400 $kg/m^3$
Schwindung : 0,40 ‰
Wasseraufnahme : 7,2 Volumenprozent (bestimmt, wie in Beispiel 1 angegeben)

## Vergleichsversuch

Die in Beispiel 2 beschriebene Arbeitsweise wird wiederholt mit der Abänderung, daß die 0,45 kg der Organosiloxan enthaltenden Mischung nicht mitverwendet werden. Es werden also die 58,5 kg Quarzsand in der Kugelmühle naß zu einem leichtflüssigen Schlamm gemahlen. In diesen Schlamm werden zunächst 5,0 kg Portlandzement, dann 24,5 kg ungelöschter Kalk, dann 12,0 kg « Abkratzschlamm », dann soviel Wasser, daß die Gesamtmenge an Wasser 58,5 kg beträgt und schließlich 0,14 kg des dünnschuppigen Aluminiumpulvers eingemischt. Aus dieser Mischung werden ohne weiteren Zusatz Formlinge gegossen und die Formlinge wie in Beispiel 2 angegeben gehärtet.

(Bei « Abkratzschlamm » handelt es sich um eine Mischung, die bei einem vorhergehenden Ansatz aus den vorstehend angegebenen Bestandteilen bereitet und bei der Formgebung als Abfall anfiel).

Der so erhaltene Gasbeton hat die gleichen Eigenschaften wie der gemäß Beispiel 2 hergestellte Gasbeton mit der Ausnahme, daß die Wasseraufnahme (bestimmt, wie in Beispiel 1 angegeben) 15 Volumenprozent beträgt.

## Patentansprüche

1. Verfahren zum Herstellen von Bausteinen oder Bauteilen, die unter Dampfeinwirkung abbinden oder gehärtet werden, wobei der Brei aus hydraulischem Bindemittel, Wasser und Zuschlagstoffen vor der Formgebung und Einwirkung des Wasserdampfs Organo(poly)siloxan enthält, dadurch gekennzeichnet, daß zumindest ein Teil des Organo(poly)siloxans aus mindestens einer Verbindung der allgemeinen Formel

$$R_xSi(OR')_y(OH)_zO_{\frac{4-x-y-z}{2}}$$

besteht, worin mindestens 10 % der Anzahl der Reste R gleiche oder verschiedene gegebenenfalls cyclische Alkylreste mit mindestens 4 Kohlenstoffatomen je Rest und die gegebenenfalls vorhandenen übrigen Reste R Alkylreste mit 1 bis 3 Kohlenstoffatomen je Rest und/oder Phenylreste, R′ gleiche oder verschiedene Alkylreste mit 1 bis 4 Kohlenstoffatomen je Rest bedeuten, x 0, 1, 2 oder 3, durchschnittlich 0,4 bis 1,8, y 0, 1, 2 oder 3, durchschnittlich 0,01 bis 2,0 und z 0, 1, 2 oder 3, durchschnittlich 0,00 bis 0,5 ist, mit der Maßgabe, daß die Summe von $x + y + z$ höchstens 3,5 ist.

2. Verfahren nach Anspruch 1, dadurch gekennzeichnet, daß x höchstens 1,5 ist.

3. Verfahren nach Anspruch 1 oder 2, dadurch gekennzeichnet, daß die Alkylreste R mindestens 8 Kohlenstoffatome je Rest enthalten.

4. Verfahren nach mindestens einem der Ansprüche 1 bis 3, dadurch gekennzeichnet, daß das Organo(poly)siloxan der im Anspruch 1 angegebenen Formel eine Viskosität von höchstens 300 $mm^2 \cdot s^{-1}$ bei 25 °C aufweist.

5. Verfahren nach mindestens einem der Ansprüche 1 bis 4, dadurch gekennzeichnet, daß Organo(poly)-siloxan der im Anspruch 1 angegebenen Formel zunächst nur mit einem Teil der Rohstoffe, aus denen der Brei aus hydraulischem Bindemittel, Wasser und Zuschlagstoffen bereitet wird, vermischt und das so erhaltene Gemisch dann mit der restlichen Menge der Rohstoffe vermischt wurde.

6. Verfahren nach mindestens einem der Ansprüche 1 bis 5, dadurch gekennzeichnet, daß Organo(poly)siloxan der im Anspruch 1 angegebenen Formel im Gemisch mit Lösungsmittel, das mit Wasser mischbar ist, eingesetzt wurde.

7. Verfahren nach mindestens einem der Ansprüche 1 bis 6, dadurch gekennzeichnet, daß Organo(poly)siloxan der im Anspruch 1 angegebenen Formel im Gemisch mit oberflächenaktivem Stoff

oder Schutzkolloid oder einer Mischung aus oberflächenaktivem Stoff und Schutzkolloid eingesetzt wurde.

8. Verfahren nach mindestens einem der Ansprüche 1 bis 7, dadurch gekennzeichnet, daß Organo(poly)siloxan der im Anspruch 1 angegebenen Formel im Gemisch mit als Hydrolysekatalysator geeigneter Metallverbindung vorliegt.

9. Verfahren nach mindestens einem der Ansprüche 1 bis 7, dadurch gekennzeichnet, daß Organo(poly)siloxan der im Anspruch 1 angegebenen Formel vor dem Vermischen mit den anderen Stoffen mit anorganischer Säure oder Carbonsäure vermischt wurde.

**Claims**

1. Process for the manufacture of building blocks or building components that bind or harden under the action of steam, the slurry comprising hydraulic binder, water and aggregates containing an organo(poly)siloxane before the shaping and before being acted upon by steam, characterised in that at least a portion of the organo(poly)siloxane comprises at least one compound of the general formula

$$R_xSi(OR')_y(OH)_zO_{\frac{4-x-y-z}{2}}$$

in which at least 10 % of the number of radicals R are identical or different optionally cyclic alkyl radicals having at least 4 carbon atoms per radical, and any remaining radicals R are alkyl radicals having from 1 to 3 carbon atoms per radical and/or phenyl radicals, R' represents identical or different alkyl radicals having from 1 to 4 carbon atoms per radical, x represents 0, 1, 2 or 3, on average from 0.4 to 1.8, y represents 0, 1, 2 or 3, on average from 0.01 to 2.0, and z represents 0, 1, 2 or 3, on average from 0.00 to 0.5, with the proviso that the sum of $x + y + z$ is a maximum of 3.5.

2. Process according to claim 1, characterised in that x is a maximum of 1.5.

3. Process according to claim 1 or 2, characterised in that the alkyl radicals R contain at least 8 carbon atoms per radical.

4. Process according to at least one of claims 1 to 3, characterised in that organo(poly)siloxane of the formula given in claim 1 has a viscosity of a maximum of 300 $mm^2 \cdot s^{-1}$ at 25 °C.

5. Process according to at least one of claims 1 to 4, characterised in that organo(poly)siloxane of the formula given in claim 1 is first mixed only with a portion of the raw materials from which the slurry comprising hydraulic binder, water and aggregates is prepared, and the resulting mixture is then mixed with the remainder of the raw materials.

6. Process according to at least one of claims 1 to 5, characterised in that organo(poly)siloxane of the formula given in claim 1 is used in admixture with a water-miscible solvent.

7. Process according to at least one of claims 1 to 6, characterised in that organo(poly)siloxane of the formula given in claim 1 is used in admixture with a surface-active substance or protective colloid or a mixture of a surface-active substance and protective colloid.

8. Process according to at least one of claims 1 to 7, characterized in that organo(poly)siloxane of the formula given in claim 1 is present in admixture with a metal compound suitable as hydrolysis catalyst.

9. Process according to at least one of claims 1 to 7, characterized in that organo(poly)siloxane of the formula given in claim 1 is mixed with an inorganic acid or carboxylic acid before being mixed with the other materials.

**Revendications**

1. Procédé pour produire des blocs ou éléments de construction, qui font prise ou que l'on fait durcir sous l'effet de la vapeur d'eau, la pâte formée d'un liant hydraulique, d'eau et d'additif contenant, avant formage et action de la vapeur d'eau, du (poly)organosiloxane, procédé caractérisé en ce qu'au moins une partie du (poly)organosiloxane consiste en au moins un composé de formule générale :

$$R_xSi(OR')_y(OH)_zO_{\frac{4-x-y-z}{2}}$$

dans laquelle au moins 10 % du nombre des restes R, identiques ou différents, représentent des restes alkyles, éventuellement cycliques, comportant au moins 4 atomes de carbone par reste et les autres restes R éventuellement présents représentent des restes alkyles comportant 1 à 3 atomes de carbone par reste et/ou des restes phényles, R' représente des restes alkyles identiques ou différents comportant 1 à 4 atomes de carbone par reste, x vaut 0, 1, 2 ou 3 et en moyenne 0,4 à 1,8, y vaut 0, 1, 2 ou 3 et en moyenne 0,01 à 2,0 et z vaut 0, 1, 2 ou 3 et en moyenne 0,00 à 0,5, à la condition que la somme $(x + y + z)$ vaille au maximum 3,5.

2. Procédé selon la revendication 1, caractérisé en ce que x vaut au maximum 1,5.

3. Procédé selon la revendication 1 ou 2, caractérisé en ce que les restes alkyles R contiennent au moins 8 atomes de carbone par reste.

4. Procédé selon l'une au moins des revendications 1 à 3, caractérisé en ce que le (poly)organosiloxane répondant à la formule indiquée à la revendication 1 présente une viscosité d'au maximum 300 $mm^2 \cdot s^{-1}$ à 25 °C.

5. Procédé selon l'une au moins des revendications 1 à 4, caractérisé en ce que l'on a mélangé le (poly)organosiloxane, répondant à la formule indiquée à la revendication 1, tout d'abord avec une partie seulement des matières premières à partir desquelles on prépare la pâte de liant hydraulique, d'eau et d'additif, et l'on a ensuite mélangé le mélange ainsi obtenu avec la quantité restante des matières premières.

6. Procédé selon l'une au moins des revendications 1 à 5, caractérisé en ce qu'on a utilisé le (poly)organosiloxane, répondant à la formule indiquée à la revendication 1, en mélange avec un solvant miscible à l'eau.

7. Procédé selon l'une au moins des revendications 1 à 6, caractérisé en ce qu'on a utilisé le (poly)organosiloxane, répondant à la formule indiquée à la revendication 1, en mélange avec une substance tensio-active ou un colloïde protecteur ou un mélange d'une substance tensio-active et d'un colloïde protecteur.

8. Procédé selon l'une au moins des revendications 1 à 7, caractérisé en ce que le (poly)organosiloxane, répondant à la formule indiquée à la revendication 1, se trouve en mélange avec un composé de métal convenant comme catalyseur d'hydrolyse.

9. Procédé selon l'une au moins des revendications 1 à 7, caractérisé en ce que, avant le mélangeage avec les autres substances, le (poly)organosiloxane, répondant à la formule indiquée à la revendication 1, a été mélangé à de l'acide minéral ou à de l'acide carboxylique.